(19)

**Europäisches Patentamt**
**European Patent Office**
**Office européen des brevets**

(11) **EP 4 601 350 A1**

(12) **EUROPEAN PATENT APPLICATION**

(43) Date of publication:
**13.08.2025 Bulletin 2025/33**

(21) Application number: **24156058.0**

(22) Date of filing: **06.02.2024**

(51) International Patent Classification (IPC):
**H04W 24/02** (2009.01)

(52) Cooperative Patent Classification (CPC):
**H04W 24/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
- **RAMACHANDRAN, Srilatha**
  **560093 KARNATAKA (IN)**
- **KADADI, Shivanand**
  **560065 KARNATAKA (IN)**
- **FEKI, Afef**
  **92330 SCEAUX (FR)**
- **HASSAN, Sakira**
  **02780 ESPOO (FI)**

(74) Representative: **Page White Farrer**
**Bedford House**
**21a John Street**
**London WC1N 2BF (GB)**

(54) **COMPUTATIONAL MODE SWITCH**

(57) A user equipment comprising: means for receiving from an access node one or more conditions associated with switching to a first computational model, the one or more conditions being based on one or more estimations for a cost for transferring the first computational model to the user equipment versus an expected performance gain associated with use of the first computational model by the user equipment; and means sending to the access node a notification when one or more of the one or more conditions associated with switching to the first computational model are satisfied, the means for receiving is further for receiving the first computational model from the access node when the first computational model is to be used.

Fig. 7

Processed by Luminess, 75001 PARIS (FR)

**Description**

<u>Field</u>

This disclosure relates to apparatus, methods and computer programs and in particular but not exclusively to apparatus, methods and computer programs relating to computational model use.

<u>Background</u>

A communication network can be seen as a facility that enables communications between two or more communication devices or provides communication devices access to a data network. A mobile or wireless communication network is one example of a communication network. A communication device may be provided with a service or application.

Such communication networks operate in according with standards such as those provided by 3GPP (Third Generation Partnership Project) or ETSI (European Telecommunications Standards Institute). Examples of standards are the so-called 5G (5th Generation) standards provided by 3GPP.

<u>Summary</u>

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect, there is provided a user equipment comprising: means for receiving from an access node one or more conditions associated with switching to a first computational model, the one or more conditions being based on one or more estimations for a cost for transferring the first computational model to the user equipment versus an expected performance gain associated with use of the first computational model by the user equipment; and means sending to the access node a notification when one or more of the one or more conditions associated with switching to the first computational model are satisfied, the means for receiving is further for receiving the first computational model from the access node when the first computational model is to be used.

Prior to receiving the first computational model, the means for receiving is further being for receiving information from the access node indicating that the first computational model is to be used.

The estimation for a cost for transferring the first computational model to the user equipment versus an expected performance gain associated with use of the first computational model by the user equipment may be associated with a switching policy or a set of conditions for a switching policy.

The user equipment may comprise means for determining that the first computational model is to be used, said notification being sent to the access node in response to determining that the first computational model is to be used.

The first computational model may comprise one or more of an associated validity area and an associated validity period.

The validity area may comprise one or more specific cells associated with a respective access node.

When the first computational model is not to be used, the means for receiving may be for receiving an indication indicating a method to be used or a default method is to be used.

The method may be a non- machine learning method or machine learning model method.

The default method may be a non- machine learning method or a machine learning model method.

The one or more conditions associated with switching to the first current computational model may be provided in a switching policy.

The first computational model may comprise a first machine learning model or a non-machine learning method.

In a learning phase, the receiving means may be for receiving a request from an access node for information about the user equipment when an update of switching policy is needed, the means for sending may be for sending the information about the user equipment to the access node, and the means for receiving may be for receiving an updated switching policy for the first machine learning model.

An update of switching policy may be needed when a current computational model is no longer valid.

An update of switching policy may be needed when the user equipment moves out of a validity area associated with a current computational model.

An update of switching policy may be needed responsive to a trigger from a network entity, a network function or an access node. The network entity may be an operations, administration, and management function.

The first computational model may be used for one or more of measurement, RRM (radio resource management), or positioning. For example: beam prediction; beam management; channel state information compression; and positioning the user equipment.

According to a second aspect, there is provided a method comprising; receiving from an access node one or more conditions associated with switching to a first computational model by a user equipment, the one or more conditions being based on one or more estimations for a cost for transferring the first computational model to the user equipment versus an expected performance gain associated with use of the first computational model by the user equipment; sending to the access node a notification when one or more of the one or more conditions associated with switching to the first computational model are satisfied; and receiving the first computational model from the access node when the first computational model is to be used.

Prior to receiving the first computational model, the method may comprise receiving information from the access node indicating that the first computational model is to be used.

The method may comprise determining that the first computational model is to be used, said notification being sent to the access node in response to determining that the first computational model is to be used.

The estimation for a cost for transferring the first computational model to the user equipment versus an expected performance gain associated with use of the first computational model by the user equipment may be associated with a switching policy or a set of conditions for a switching policy.

The first computational model may comprise one or more of an associated validity area and an associated validity period.

The validity area may comprise one or more specific cells associated with a respective access node.

When the first computational model is not to be used, method may comprise receiving an indication indicating a method to be used or a default method is to be used.

The method may be a non- machine learning method or a machine learning model method.

The default method may be a non- machine learning method or machine learning model method.

The one or more conditions associated with switching to the first current computational model may be provided in a switching policy.

The first computational model may comprise a first machine learning model or a non-machine learning method.

In a learning phase, the method may comprise receiving a request from an access node for information about the user equipment when an update of switching policy is needed, sending the information about the user equipment to the access node, and receiving an updated switching policy for the first machine learning model.

An update of switching policy may be needed when a current computational model is no longer valid.

An update of switching policy may be needed when the user equipment moves out of a validity area associated with a current computational model.

An update of switching policy may be needed responsive to a trigger from a network entity, a network function or an access node. The network entity may be an operations, administration, and management function.

The first computational model may be used for one or more of measurement, RRM (radio resource management), or positioning. For example: beam prediction; beam management; channel state information compression; and positioning the user equipment.

The method may be performed by an apparatus. The apparatus may be a user equipment.

The user equipment may comprise at least one processor and at least one memory storing instructions that, when executed by the at least one processor, cause the user equipment at least to perform any of the methods discussed in relation to the second aspect.

According to a third aspect, there is provided an apparatus comprising: means for sending to a user equipment one or more conditions associated with switching to using a first computational model, the one or more conditions being based on one or more estimations for a cost for transferring the first computational model to the user equipment versus an expected performance gain associated with use of the first computational model by the user equipment; and means for receiving a notification when one or more of the one or more conditions associated with switching to using the first computational model by the user equipment are satisfied, the means for sending further being for sending the first computational model to the user equipment when the first computational model is to be used.

Prior to sending the first computational model, the means for sending may be for sending information to the user equipment indicating that the first computational model is to be used.

The estimation for a cost for transferring the first computational model to the user equipment versus an expected performance gain associated with use of the first computational model by the user equipment may be associated with a switching policy or a set of conditions for a switching policy.

The apparatus may comprise means for determining if the first computational model is to be used by the user equipment, the determining using the one or more conditions.

The notification may indicate that the first computational model is to be used by the user equipment.

The notification may comprise a request for the first computational model.

The first computational model may comprise one or more of an associated validity area and an associated validity period.

The validity area may comprise one or more specific cells associated with a respective access node.

When the first computational model is not to be used, the means for sending may be for sending information to the user equipment, the information comprising information indicating a method to be used or a default method is to be used.

The method may be a non- machine learning method or machine learning model method.

The default method may be a non- machine learning method or machine learning model method.

The one or more conditions associated with switching to using the first computational model may be provided in a switching policy.

The first computational model may comprise a first machine learning model or a non-machine learning method.

In a learning phase, the sending means may be for sending a request to the user equipment for information about the user equipment when an update of switching policy is required, the means for receiving may be for receiving the information about the user equipment, and the means for sending may be for sending an updated switching policy for the first machine learning model.

An update of switching policy may be needed when a current computational model is no longer valid.

An update of switching policy may be needed when the user equipment moves out of a validity area associated with a current computational model.

An update of switching policy may be needed responsive to a trigger from a network entity, a network function or an access node. The network entity may be an operations, administration, and management function.

The apparatus may comprise means for determining, in the learning phase, a reward, the reward taking into account a cost for transferring the first computational model to the user equipment and an expected performance gain associated with use of the first computational model by the user equipment.

The first computational model may be used for one or more of measurement, RRM (radio resource management), or positioning. For example: beam prediction; beam management; channel state information compression; and positioning the user equipment.

The apparatus may comprise an access node.

According to a fourth aspect, there is provided a method comprising: sending to a user equipment one or more conditions associated with switching to using a first computational model, the one or more conditions being based on one or more estimations for a cost for transferring the first computational model to the user equipment versus an expected performance gain associated with use of the first computational model by the user equipment; receiving a notification when one or more of the one or more conditions associated with switching to using the first computational model by the user equipment are satisfied; and sending the first computational model to the user equipment when the first computational model is to be used.

Prior to sending the first computational model, the method may comprise sending information to the user equipment indicating that the first computational model is to be used.

The method may comprise determining if the first computational model is to be used by the user equipment, the determining using the one or more conditions.

The notification may indicate that the first computational model is to be used by the user equipment.

The notification may comprise a request for the first computational model.

The first computational model may comprise one or more of an associated validity area and an associated validity period.

The validity area may comprise one or more specific cells associated with a respective access node.

When the first computational model is not to be used, the method may comprise sending information to the user equipment, the information comprising information indicating a method to be used or a default method is to be used.

The method may be a non- machine learning method or machine learning model method.

The default method may be a non- machine learning method or machine learning model method.

The one or more conditions associated with switching to using the first computational model may be provided in a switching policy.

The first computational model may comprise a first machine learning model or a non-machine learning method.

In a learning phase, method may comprise sending a request to the user equipment for information about the user equipment when an update of switching policy is required, the receiving the information about the user equipment, and sending an updated switching policy for the first machine learning model.

An update of switching policy may be needed when a current computational model is no longer valid.

An update of switching policy may be needed when the user equipment moves out of a validity area associated with a current computational model.

An update of switching policy may be needed responsive to a trigger from a network entity, a network function or an access node. The network entity may be an operations, administration, and management function.

The method may comprise determining, in the learning phase, a reward, the reward taking into account a cost for transferring the first computational model to the user equipment and an expected performance gain associated with use of the first computational model by the user equipment.

The first computational model may be used for one or more of: beam prediction; beam management; channel state information compression; and positioning the user equipment.

The method may be performed by an apparatus. The apparatus may comprise an access node.

The apparatus may comprise at least one processor and at least one memory storing instructions that, when executed by the at least one processor, cause the apparatus at least to perform any of the methods discussed in relation to the fourth aspect.

According to fifth aspect, there is provided a method comprising: receiving information about one or more user equipment when an update of switching policy is required; and using the received information to determine an updated switching policy for switching to a first machine learning model based on a cost for transferring the first computational model to a respective user equipment versus an expected performance gain associated with use of the first computational model by the respective user equipment.

The method may comprise receiving information about one or more user equipment in response to providing of a request for information.

An update of switching policy may be required when a current computational model is no longer valid.

An update of switching policy may be required when the user equipment moves out of a validity area associated with a current computational model.

An update of switching policy may be needed responsive to determining that an update of switching policy is required.

The method may comprise sending a request to a respective user equipment for information about the respective user equipment when the respective user equipment moves out of a validity area associated with a current machine learning model.

The method may comprise sending the updated switching policy to the user equipment.

The method may be performed by an apparatus. The apparatus may be an access node, network function or network entity.

The network entity may be an operations, administration, and management function.

The apparatus may comprise means for performing any of the methods discussed in relation to the fifth aspect.

The apparatus may comprise at least one processor and at least one memory storing instructions that, when executed by the at least one processor, cause the apparatus at least to perform any of the methods discussed in relation to the fifth aspect.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by an apparatus, cause the apparatus to perform any of the methods set out previously.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

Brief description of Figures

Some examples will now be described in further detail, by way of illustration only, with reference to the accompanying drawings, in which:

Figure 1 shows a schematic representation of a parts of a communication system;
Figure 2 shows a schematic representation of an apparatus of the communication system of Figure 1 according to some example embodiments;
Figure 3 shows a schematic representation of a user equipment;
Figure 4 shows an example framework for training and deploying an AI/ML (artificial intelligence/machine learning) model;

Figure 5 illustrates an example of UE (user equipment) mobility and AI/ML model use;
Figure 6 shows a first procedure of some embodiments;
Figure 7 shows a second procedure of some embodiments;
Figure 8 shows a third procedure of some embodiments;
Figure 9 shows a fourth procedure of some embodiments;
Figure 10 shows a first method of some embodiments; and
Figure 11 shows a second method of some embodiments.

Detailed description

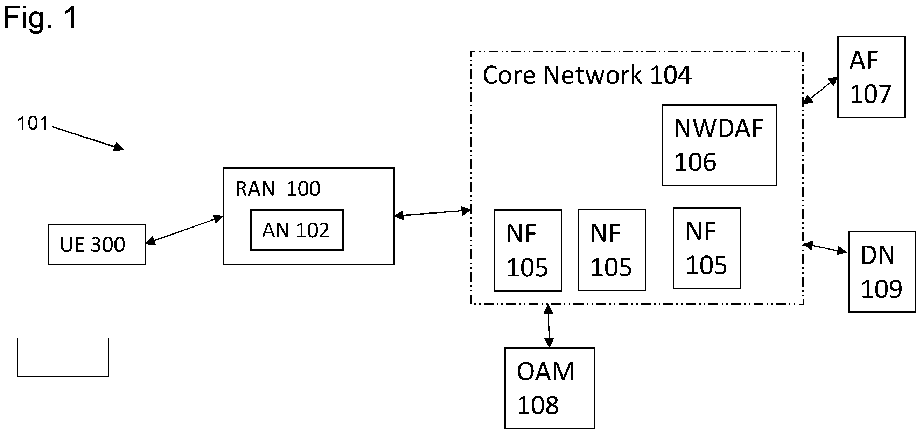

In the following certain embodiments are explained with reference to communication devices capable of communication via a wireless cellular system and mobile communication systems serving such communication devices. Before explaining in detail, the exemplifying embodiments, certain general principles of a wireless communication system, access systems thereof, and communication devices are briefly explained with reference to Figures 1, 2 and 3 to assist in understanding the technology underlying the described examples.

Figure 1 shows a schematic representation of a wireless communication system 101. In a wireless communication system, such as the wireless communication system 101 shown in Figure 1, user equipment (UE) or terminal devices 300 are provided with wireless access via a radio access network (RAN) 100. The RAN 100 may comprise one or more base stations or radio access network (RAN) nodes 102, such as a gNodeB (gNB). A base station or RAN node may comprise one or more distributed units connected to a central unit.

The UE 300 is provided with an appropriate receiving and transmitting apparatus for enabling communications, for example for enabling wireless (e.g., radio) communications with the radio access network. The UE 300 may access a carrier signal provided by a base station or access node and transmit and/or receive communications modulated on the carrier signal.

The wireless communication system 101 shown in Figure 1 comprises a UE 300, a radio access network (RAN 100), and a core network 104 comprising one or more network functions (NF). The wireless communication system 101 may be connected to one or more application function (AFs) 107, an operations, administration, and management function (OAM) 108 and/or one or more data networks (DNs) 109.

The core network 104 comprises one or more network functions, including a network data analytics function (NWDAF) 106 and one or more other NFs which are referenced 105.

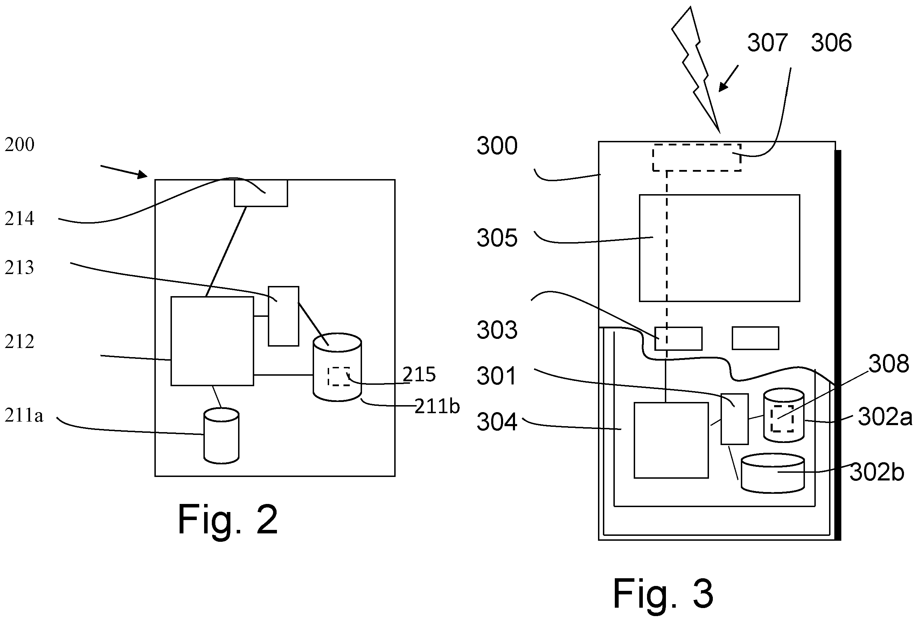

Figure 2 illustrates an example of an apparatus 200.

The apparatus 200 may comprise or implement one or more of the network functions shown in Figure 1. The apparatus 200 may have at least one processor and at least one memory storing instructions of one or more the network functions shown in Figure 1 that, when executed by at least one of the at least one processor cause operations or actions of the one or more network functions to be performed. For example, the network function may be a NWDAF.

Alternatively, the apparatus 200 may be provided in or be an access node. The apparatus 200 may have at least one processor and at least one memory storing instructions of an access node that, when executed by at least one of the at least one processor cause operations or actions of the access node to be performed. The access node may be a central access node in some embodiments.

Alternatively, the apparatus 200 may be provided in or be an OAM. The apparatus 200 may have at least one processor and at least one memory storing instructions of an OAM that, when executed by at least one of the at least one processor cause operations or actions of the OAM to be performed.

In this example, the apparatus 200 may comprise at least one random access memory (RAM) 211a, and/or at least one read only memory (ROM) 211b. The apparatus 200 may comprise at least one processor 212, 213 and/or a network interface 214. The at least one processor 212, 213 may be coupled to the at least one memory which in this example is the RAM 211a and the ROM 211b. The at least one processor 212, 213 may be configured to execute an appropriate software code 215.

The software code 215 may, for example, include software code of one or more of the network functions shown in Figure 1, including software code of the network function which allows the apparatus to perform one or more operations of one or more of the present aspects.

Alternatively, the software code may, for example, include software code of the access node, which allows the apparatus to perform one or more operations of one or more of the present aspects.

Alternatively, the software code may, for example, include software code of the OAM, which allows the apparatus to perform one or more operations of one or more of the present aspects.

Figure 3 illustrates an example of a communication device 300 or terminal. The communication device 300 may be any device capable of sending and receiving radio signals. Non-limiting examples of a communication device 300 comprise a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The communication device may be an XR (extended reality) device such as a headset or may be capable of supporting XR.

The communication device 300 may send or receive, for example, radio signals carrying communications. The communications may be one or more of voice, electronic mail (email), text message, multimedia, data, machine data and so on.

The communication device 300 may receive radio signals over an air or radio interface 307 via a transceiver apparatus 306. The transceiver apparatus 306 may be provided for example by means of a radio part and associated antenna arrangement. The antenna arrangement may be arranged internally or externally to the communication device and may include a single antenna or multiple antennas. The antenna arrangement may be an antenna array comprising a plurality of antenna elements.

The communication device 300 may be provided with at least one processor 301, and/or at least one memory. The at least one memory may be at least one ROM 302a, and/or at least one RAM 302b. Other possible components 303 may be provided for use in software and hardware aided execution of tasks it is designed to perform, including control of access to and communications with access systems, such as the RAN and/or other communication devices. The at least one processor 301 is coupled to the RAM 302b and the ROM 302a. The at least one processor 301 may be configured to execute instructions of software code 308. Execution of the instructions of the software code 308 may for example allow the communication device 300 to perform one or more operations. The software code 308 may be stored in the ROM 302a. It should be appreciated that in other embodiments, any other suitable memory may be alternatively or additionally used.

The at least one processor 301, the at least one ROM 302a, and/or the at least one RAM 302b can be provided on an appropriate circuit board, in an integrated circuit, and/or in chipsets. This feature is denoted by reference 304.

The communication device 300 may optionally have a user interface such as keypad 305, touch sensitive screen or pad, combinations thereof or the like. Optionally, the communication device may have one or more of a display, a speaker and a microphone.

In the following examples, the term UE or user equipment is used. This term encompasses any of the examples of communication devices 300 previously discussed and/or any other communication device or terminal.

In general, AI/ML mechanisms comprise at least one of a data collection process, a training process, or an inference process.

During a data collection process, data is collected by at least one of a network node, a management entity, or a UE for the purpose of AI/ML model training, data analytics and/or inference processes.

During a training process, an AI/ML model or algorithm is trained (e.g., to learn an input/output relationship) in a data driven model to obtain a trained AI/ML model for an inference process.

During an inference process, a trained AI/ML model is used to produce a set of outputs based on a set of inputs. Stated differently, the trained AI/ML model is configured to use the learnt input/output relationship to convert a provided input to the trained AI/ML model into an output during the inference process.

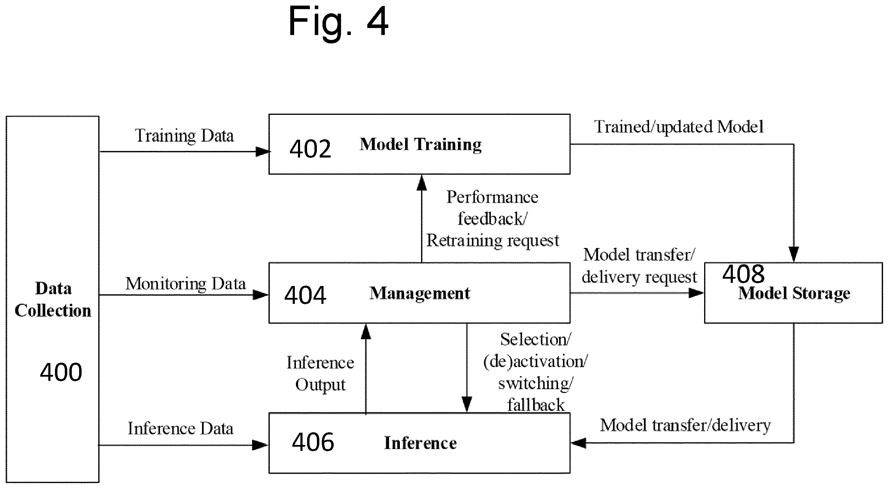

Reference is made to Figure 4 which schematically shows a functional framework for the training and deployment of an AI/ML model. An example of such a function framework for AI/ML is shown in Figure 4.4-1 of TR38.843 v1.0.0 and described in that document.

The framework of Figure 4 shows the lifecycle management (LCM) for an AI/ML model. The LCM describes how an AI/ML model is trained and deployed as well as other activities carried out by the network or UE over the course of operation. In this example, the LCM is divided into four modules. These modules are a data collection module 400, a model training module 402, a model management module 404, and a model inference module 406. Figure 4 schematically shows a general workflow relating to supervised learning aspects among these modules.

The data collection module 400 collects training data which is provided to the model training module 402.

The data collection module 400 collects monitoring data which is provided to the model management module 404.

The data collection module 400 collects inference data which is provided to the model inference module 406.

The model training module 402 outputs a trained output model which is output to model storage 408.

The model training module 402 receives performance feedback and/or a retraining request from the model management module 404.

The model management module 404 provides a model transfer or delivery request to model storage 408.

The model management module 404 provides an output to the model inference module 406. The output may be for model selection, model activation, model deactivation, model switching or model fallback.

The model inference module 406 provides an inference output to the model management module 404.

The model inference module 406 receives the model from the model storage 408.

Model activation is the enabling of an AI/ML model for a specific AI/ML-enabled feature.

Model deactivation is the disabling of an AI/ML model for a specific AI/ML-enabled feature.

Model download is the model transfer from the network to UE.

Model monitoring is the procedure that monitors the inference performance of the AI/ML model.

Model parameter update is the process of updating the model parameters of a model.

Model selection is the process of selecting an AI/ML model for activation among multiple models for the same AI/ML enabled feature. Model selection may or may not be carried out at the same time as model activation.

Model switching is the deactivating of a currently active AI/ML model and the activating of a different AI/ML model for a specific AI/ML-enabled feature.

Model update is the process of updating the model parameters and/or model structure of a model.

Model upload is the model transfer from UE to the network.

In some embodiments, a AI/ML model may be associated with a validity area. The validity area may be an area in which the model is considered to be appropriate or perform well. For example, in the validity area, the model may provide at least a threshold level of accuracy or given level of performance gain. In other words the model will provide better results when used in the validity area as compared to if the model were to be used outside the validity area.

In some embodiments, alternatively or additionally, the AI/ML model may be associated with a validity period. The validity period may be time in which the model is considered to be appropriate or perform well. The validity period may for example be associated with a given time period of a day and/or associated with one or more days of the week. For example, during the validity period, the model may provide at least a threshold level of accuracy or given level of performance gain. In other words the model will provide better results when used in the validity period as compared to if the model were to be used outside the validity period.

Some embodiments relate to the use of AI/ML models by a UE. In some embodiments, the model used may depend on the cell in which the UE is located. The validity area of the model may be a cell, in this example. In some embodiments, the model may be a single cell specific ML model. In other embodiments, the model may be associated with two or more cells. The validity area of a model may be a two or more cells, in this example.

In some embodiments, the model is transferred to the UE by the network. Transferring a machine learning model to a UE uses a relatively large number of bytes due to the inherent complexity associated with machine learning models.

When a UE moves from one cell associated with one model to a different cell associated with a different model, that different model will need to be transferred from the network to the UE. The moving of cell may be a result of the UE physically moving or as a result of a context changing the UE from one cell to another.

Some embodiments relate to AI/ML model inference at UE side. This may be controlled by the network. The trained model is decided and/or prepared by the network and then transferred to the UE.

In some embodiments, for some use cases, the validity of the model is restrained to the cell coverage. Some examples of possible cases comprise one or more of beam prediction, UE positioning, and CSI (channel state information) compression. For this reason, when UE moves from one gNB to another, a model update may be realized with a transfer of a different model.

The transfer of the different model from the network to the UE is associated with a cost. The cost may be defined in terms of the data size or number of bytes required to transfer the different model to the UE. Some embodiments consider the expected performance gains which would be provided by using the different model and the associated cost to download the different model. The performance gain may be dependent on, for example, the mobility of the UE. For example, if the UE is moving quickly, the UE may not remain in the cell for very long. Given that the model for the cell can only be used by the UE for a relatively short time, due to the mobility of the UE, the performance gain associated with using the model may be outweighed by the cost associated with transferring the model to the UE.

In some embodiments the model may be prepared and/or trained at the network side.

The model may be transferred to the UE. The model may be inferred at the UE side.

In some embodiments, where the cost associated with transferring the model is too high relative to the expected performance gain, the model is not transferred.

For example, where the number of bytes required to transfer the model from base station to UE is too high relative to the expected performance gains achieved by the using that model, the model is not transferred to the UE. Instead, the UE may use a default method. The default method may be available to the UE at a lower associated cost. For example, no transferring would be required to support the default method or the associated cost is lower. The default method may be a non ML method or the default ML model, not specific to the cell. The default method may be already supported by the UE.

In some embodiments, the ML model for the previous cell may not be used in the current cell. This is because in this example, it would be better to not use the ML method which is specific to the cell and for example use a non-ML model or a default ML model. This is to avoid performance degradation due to old ML model used within the new cell. In addition, if the sojourn time expected for the UE at a cell is very short (for example due the UE moving or an expected context change) then it may be better to refrain from transferring the model to the considered UE. This may be due to the cost relating to the transfer of the model to the UE being relatively high and the duration of the of the use of the transferred model being relatively short.

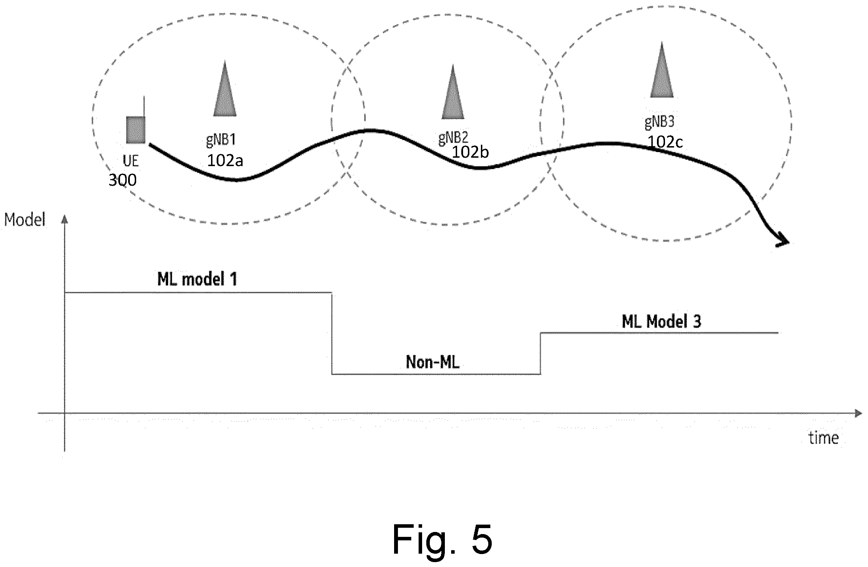

Reference is made to Figure 5 which shows an example of UE which is moving between cells and the AI/ML model used by the UE. The UE 300 is in a cell associated with a first access node, gNB1 in this example, 102a. The UE 300 uses an AI/ML model shared by gNB 1 when in the cell associated with gNB 1. When the UE 300 moves to a cell associated with a second access node, gNB2 in this example, 102b, it is determined that is better that the gNB2 does not transfer a new ML mode to the UE. In this example the UE may use a non-AI/ML model approach. The gNB2 may indicate to the UE that it should for example switch to non-ML functionality. In this example, the UE is moving at a relatively high speed and the time that the UE is expected to stay within coverage area gNB2 is relatively small. Once the UE moves to a cell associated with a third access node, gNB3 in this example, 102c, gNB3 transfers a new AI/ML model for the cell associated with gNB3 to the UE. The UE uses this model.

In some embodiments, the optimal policy or policies to decide when a ML model is to be transferred and when not may be learned. The policy may take into account one or more of the UE context, a cost of the model transfer and an expected performance gain. A learning phase may be applied for learning one or more policies for model transfer and/or switching. The one or more policies for model transfer and/or switching may be used during an operation phase.

In some embodiments, an initial policy or rules for latency requirements for model transfer may be established. For example, a maximum limit may be set for policies or rules to decide on model transfer. Then one or more rules are established and learnt. The rules may relate to switching the UE using a AI/ML model specific to a gNB or cell or using a default method. The rules may take into account one or more mobility factors of the UE. These one or more mobility factors may determine how long the UE is in a cell. The one or more rules may take into account the loading required to transfer the AI/ML model and/or the available resources for the network to transfer the model to the UE.

In some embodiments, a model switching policy is learnt. This may be through exploration. A model switching policy may define or more conditions which should be satisfied in order for a switch to be made to a given model. One or more conditions may be defined as threshold values. For example, a set of one or more threshold values may be defined for UE speeds. The UE may need to have a speed below one of the threshold values in some examples. Additionally or alternatively, a set of one or more threshold values may be defined for a load of the UE.For example, the UE may need to have a load which is below one of the threshold values in some examples. Alternatively or additionally, one or more conditions may relate to the location of the UE in some embodiments.

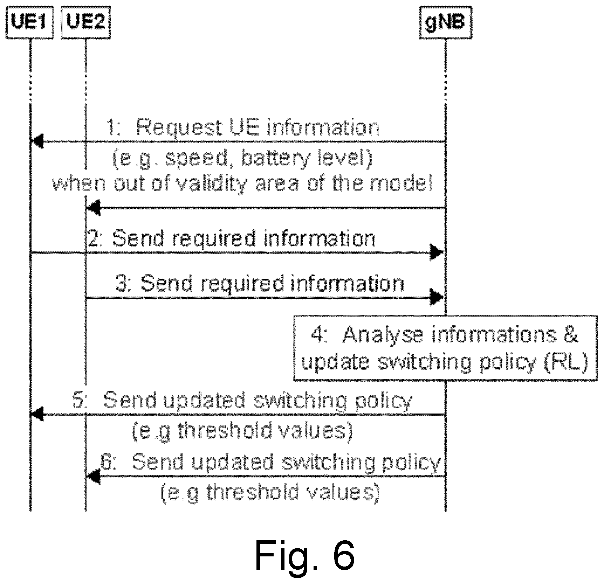

Reference is made to Figure 6 which illustrates an example of a learning phase of some embodiments.

As referenced 1, the access node (gNB in this example) requests information from one or more UEs. In this example, there are two UEs, UE1 and UE2, shown in Figure 6. However, the number of UEs may be more than two UEs. The information requested may comprise UE specific information. The UE specific information may comprise one or more of speed of the UE, battery level, and/or the loading of the UE. The information may be requested when the UE moves out of a cell or out of a validity area associated with a model.

As referenced 2, the first UE, UE1 sends the requested information to the gNB.

As referenced 3, the second UE, UE2 sends the requested information to the gNB.

As referenced 4, the gNB analyses the information received and updates, if required, the model switching policy. In some embodiments, the gNB may use reinforcement learning.

In some embodiments , the gNB estimates a cost for transferring the first computational model to the user equipment versus an expected performance gain associated with use of the first computational model by the user equipment based on the received information. The one or more estimates provided by the gNB may be used to update the model switching policy.

As referenced 5, if an updated model switching policy is required the gNB sends to the first UE, UE1 an updated switching policy. This updated switching policy may comprise one or more threshold values. , For example, the one or more estimates provided by the gNB may indicate that an updated the model switching policy is required. The one or more estimates may be used when determining the updated switching policy.

As referenced 6, the gNB sends to the second UE, UE2 the updated switching policy. This updated switching policy may comprise one or more threshold values. The threshold values which are sent to the first UE, UE1, and the second UE, UE2 may be the same or may be different.

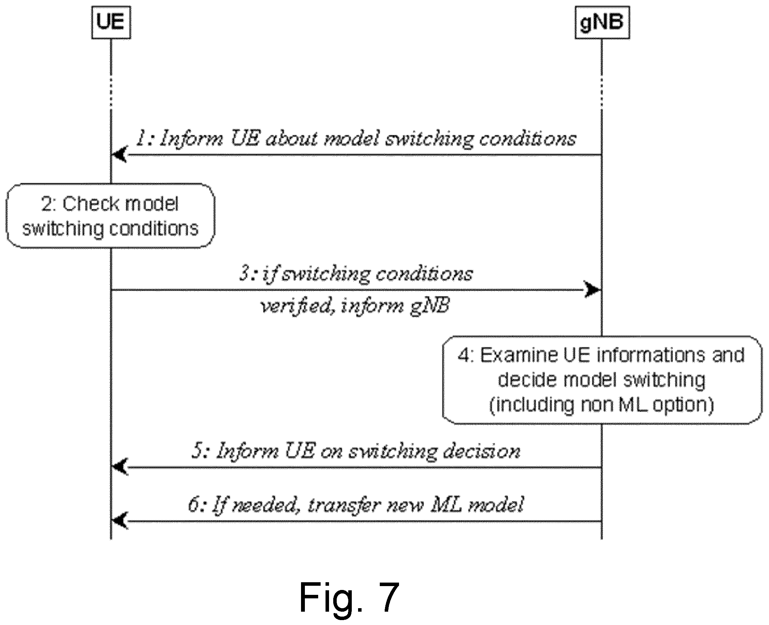

In some embodiments, the policy is put to use in an operation phase. Reference is made to Figure 7 which illustrates an example of an operation phase of some embodiments.

As referenced 1, the access node (gNB in this example), the gNB informs the UE about the model switching conditions. The gNB may inform the UE of the model switching conditions as part of a UE initiated procedure. For example, the gNB may inform the UE of the model switching conditions in response to a request from the UE. In other embodiments, the gNB may inform the UE of the model switching conditions as part of a gNB initiated procedure. In some embodiments, the gNB may inform the UE of the model switching conditions periodically, aperiodically, or in response to the occurrence of one or more events.

In some embodiments, the gNB may inform the UE of the model switching conditions. This may be based on one or more estimates of a cost for transferring the first computational model to the user equipment versus an expected performance gain associated with use of the first computational model by the user equipment

As referenced 2, the UE checks if one or more of the model switching conditions are satisfied.

As referenced 3, when one or more of the switching conditions are satisfied, the UE informs gNB. In some embodiments, the UE only informs the gNB if all of the model switching conditions are satisfied.

As referenced 4 the gNB examines UE information received and decides the option to be used by the UE. This may be to switch to a new ML model or to use a default method such as outlined previously on the optimal model switching policy which could include moving to a non-ML option.

As referenced 5 the gNB informs the UE about the decision which the gNB has made.

As referenced 6, if required, the new model is transferred to the UE by the gNB.

In some embodiments, an entity receives the information from the UE. This entity has embedded ML capability. The entity may be part of the core network. The entity may be a NWDAF 106 or RIC (RAN intelligent controller). A RIC may be used in an (ORAN (open RAN) based Architecture). The entity analyses the received information from the UE, learns the switching policy, and updates the gNB(s) with the learnt switching policy.

In alternative embodiment, in the operating phase, the UE uses the model switching policy to determine if the required one or more conditions of the model switching policy. If the one or more required conditions are satisfied, the UE will request the associated model from the access node. This may be, for example, in the part of the procedure referenced 3 in Figure 7. In this modification to the operating phase, the parts of the procedure referenced 4 and 5 may be omitted.

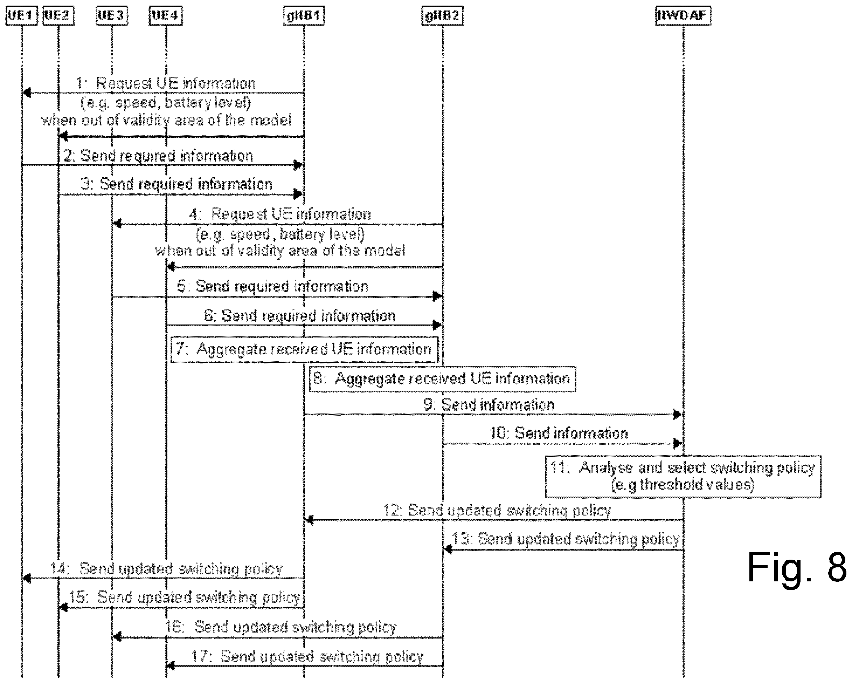

Reference is made to Figure 8 which illustrates an example of a learning phase of some embodiments where a plurality of gNBs are provided with machine learning at an entity. The entity may be a NWDAF or RIC as discussed. In the example shown in the Figure 8, the entity is a NWDAF. In this example there are two access nodes (gNBs). In other examples there may be one access node or more than two access nodes. In this example there are four UEs. In other examples there may be less than four UEs or more than four UEs.

As referenced 1, the first access node (gNB1 in this example) requests information from a first UE, UE1 and from a second UE, UE2. This may be as described in relation to the part of the procedure referenced 1 of Figure 6.

As referenced 2, the first UE, UE1 sends the requested information to the first gNB, gNB1.

As referenced 3, the second UE, UE2 sends the requested information to the first gNB, gNB1.

As referenced 4, the second access node (gNB2 in this example) requests information from a third UE, UE3 and from a fourth UE, UE4. This may be as described in relation to the part of the procedure referenced 1 of Figure 6.

As referenced 5, the third UE, UE3 sends the requested information to the second gNB, gNB2.

As referenced 6, the fourth UE, UE4 sends the requested information to the second gNB, gNB2.

As referenced 7, the first gNB, gNB1 aggregates the information received from the first and second UEs, UE1 and UE2.

As referenced 8, the second gNB, gNB2 aggregates the information received from the third and fourth UEs, UE3 and UE4.

As referenced 9, the first gNB, gNB 1 sends the aggregated information to the NWDAF.

As referenced 10, the second gNB, gNB2 sends the aggregated information to the NWDAF.

As referenced 11, the NWDAF analyses the aggregated information received from the first and second gNBs, gNB1 and gNB2. The NWDAF selects a switching policy. For example the NWDAF selects or determines one or more threshold values.

As referenced 12, the NWDAF sends to the first gNB, gNB1 the updated switching policy. This updated switching policy may comprise one or more threshold values.

As referenced 13, the NWDAF sends to the second gNB, gNB2 the updated switching policy. This updated switching policy may comprise one or more threshold values.

As referenced 14, the first gNB, gNB1 sends to the first UE, UE1 the updated switching policy.

As referenced 15, the first gNB, gNB1 sends to the second UE, UE2 the updated switching policy.

As referenced 16, the second gNB, gNB2 sends to the third UE, UE3 the updated switching policy.

As referenced 17, the second gNB, gNB2 sends to the fourth UE, UE4 the updated switching policy.

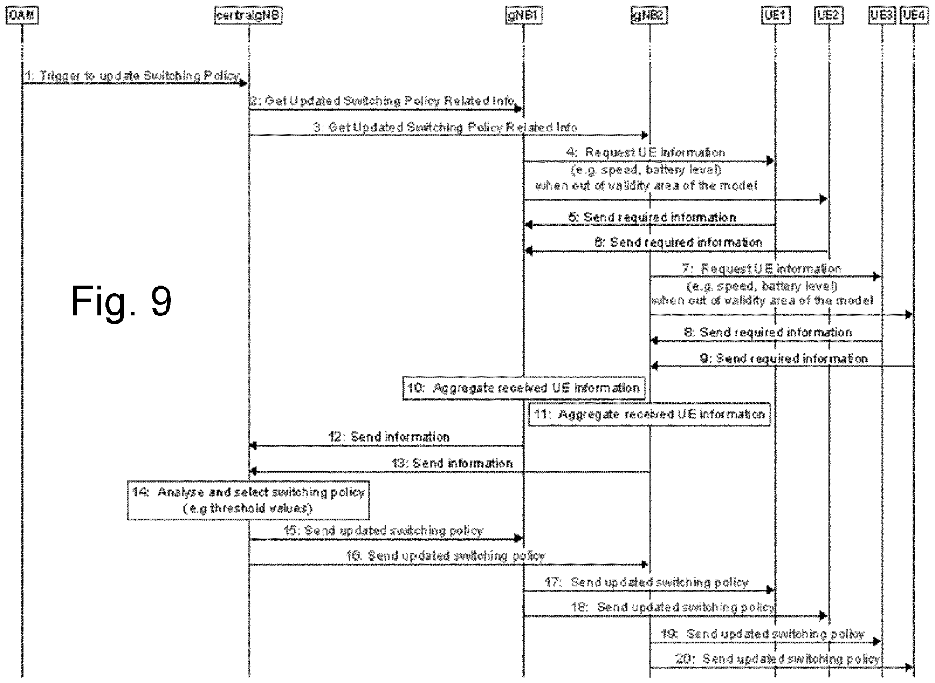

Reference is made to Figure 9 which illustrates an example of a learning phase of some embodiments where a plurality of gNBs are provided with machine learning at a central gNB entity or RIC. In the example shown in the Figure 9, central gNB entity or RIC may be selected by a OAM function. In this example there are two access nodes (gNBs). In other examples there may be one access node or more than two access nodes. In this example there are four UEs. In other examples there may be less than four UEs or more than four UEs.

As referenced 1, the OAM sends a trigger or message to the central gNB to trigger an update of the switching policy.

As referenced 2, the central gNB sends a request to the first gNB, gNB1 for updated switching policy related information.

As referenced 3, the central gNB sends a request to the second gNB, gNB2 for updated switching policy related information.

The part of the procedure referenced 4 to 11 correspond to the parts of the procedure referenced 1 to 8 of Figure 8 and will not be described again.

As referenced 12, the first gNB, gNB1 sends the aggregated information to the central gNB entity.

As referenced 13, the second gNB, gNB2 sends the aggregated information to the central gNB entity.

As referenced 14, the central gNB entity analyses the aggregated information received from the first and second gNBs, gNB1 and gNB2. The central gNB may determine one or more estimates of a cost for transferring the first computational model to the user equipment versus an expected performance gain associated with use of the first computational model by the user equipment. This may be based on the received aggregated information. The central gNB may determine if an updated to the model switching policy is required. This may be based on the one or more estimates.. The central gNB entity selects a switching policy. For example the central gNB entity selects or determines one or more threshold values.

As referenced 15, the central gNB entity sends to the first gNB, gNB1 the updated switching policy. This updated switching policy may comprise one or more threshold values.

As referenced 16, the central gNB entity sends to the second gNB, gNB2 the updated switching policy. This updated switching policy may comprise one or more threshold values.

As referenced 17, the first gNB, gNB 1 sends to the first UE, UE1 the updated switching policy.

As referenced 18, the first gNB, gNB 1 sends to the second UE, UE2 the updated switching policy.

As referenced 19, the second gNB, gNB2 sends to the third UE, UE3 the updated switching policy.

As referenced 20, the second gNB, gNB2 sends to the fourth UE, UE4 the updated switching policy.

Some embodiments may use a policy-based reinforcement learning (RL) approach to implement policy learning.

In some embodiments the state may be based on one or more of:
one or more parameters relating to a speed of the UE; a speed class of the UE; one or more parameters relating to the loading of the serving cell; and/or one or more parameters relating to loading of the UE, and/or one or more parameters relating to battery level of the UE.

In some embodiments the action may be based on one or more threshold values used for the switching decision.

In some embodiments the reward may be defined in dependence on the target use case of the model. Examples of use cases comprise one or more of measurement, RRM(radio resource management), and positioning. For example: CSI (channel state information) compression, beam management; and UE positioning.

The reward can translate the impact on UE performance and/or efficiency of using the AI/ML model with respect to the cost associated with downloading the mode. The performance and/or efficiency may for example be in terms of how long that AI/ML would be used before a different model is required.

For example the reward may be defined as weighted sum. One example of such a weighted sum is as follows:

$$Reward = \alpha \times UE\ throughput$$

$$+ \beta \times \frac{Duration\ of\ new\ model\ use}{ressources\ necesary\ for\ the\ model\ transfer}$$

$\alpha$ and $\beta$ are tuning parameters. The tuning parameters can be used to determine which term is of more importance. The first term relates to performance. The first term is defined in terms of throughput. The second term relates to the cost. The second term is defined in terms of the length of time which the new model is used (before being needed to be changed) - duration of new model use. The duration may be determined from one or more of: an estimated UE speed; coverage area of the cell; and predicted trajectory of the UE. The second term is defined in terms of the resources necessary for the model transfer. The resources necessary for the model transfer may be based on the size of the AI/MI, model in, for example, bytes.

The threshold value to be learnt with this example strategy may be established based on the UE speed. The learning phase is used to estimate this threshold information or value. The threshold information or value is used as part of the policy to decide either to transfer the model to the UE or no. The threshold information or value is used to decide whether to switch between an ML/AI model specific to a cell and the default method.

The UE speed may be determined counting a number of times the UE switches cell in a given duration. The cell size may be known and from the number of times the UE switches, a determination may be made as to the speed class of the UE. In some embodiments, a determination is made as to which speed class or speed range the UE falls into.

The UE speed may be related to sensing information. The sensing information may be subscriber related, positioning information, and/or MDT (minimization of drive tests) information.

The UE speed may be based on how the report on the collected data is announced by the UE. This may be through a RRC (radio resource control message). The RRC messages may comprise one or more of: a connection setup complete message, RRCConnectionSetupComplete; a setup complete message, RRCSetupComplete; a connection resume complete message, RCConnectionResumeComplete; a resume complete message, RRCResumeComplete message; or any other suitable RRC message or signalling.

The UE speed may be determined based on information available at the core network. The information available at the core network may comprise one or more of UE behaviour information in the user subscriber data (for example saved at a unified data management (UDM) function), UE mobility statistics (for example available from the NWDAF), and/or UE assisted information (for example available from an application function (AF)) which can be used for deriving a mobility pattern by the access and mobility management function, AMF. The information available at the core network may be provided to the RAN in the form of assistance information. This may be via the NG-C interface.

Some embodiments may be applied in 5G applications or beyond.

The machine learning model may be any suitable ML model. For example, the ML may be a convolutional neural network (CNN), a recurrent neural network (RNN), or a multi-layer perceptrons (MLP).

In the described embodiments, reference has been made to ML models which are transferred to the UE. It should be appreciated that other embodiments may be used with any other suitable computational model or algorithm which is associated with a validity area and/or validity period. A decision as to whether such a computational model or algorithm is to be transferred to the UE may be based on the cost associated with transferring a computational model or algorithm relative to the expected performance gain.

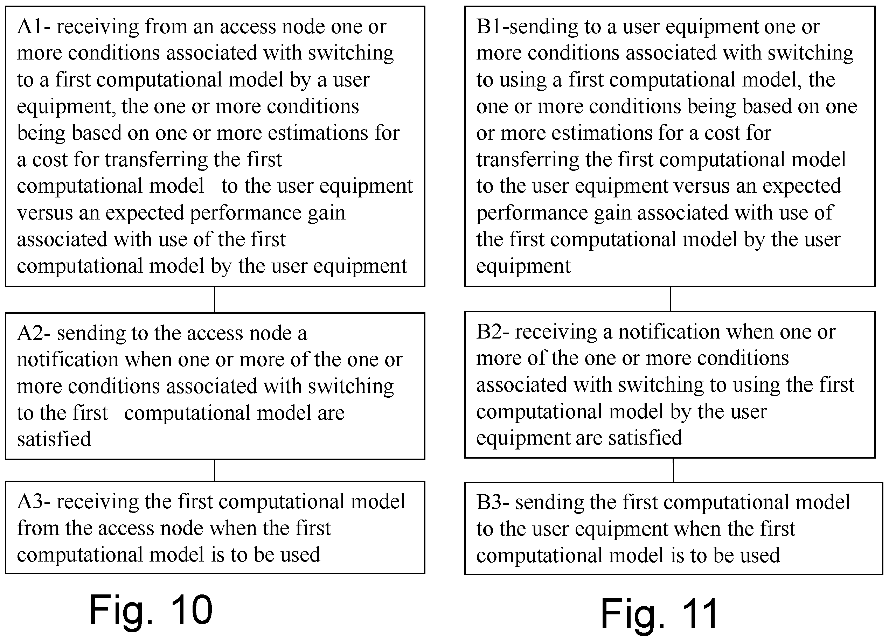

Reference is made to Figure 10 which shows a method of some embodiments.

This method may be performed by an apparatus. The apparatus may be in or be a user equipment.

The apparatus may comprise suitable circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 3.

The method may be provided by computer program code or computer executable instructions.

The method may comprise as referenced A1, receiving from an access node one or more conditions associated with switching to a first computational model by a user equipment, the one or more conditions being based on one or more estimations for a cost for transferring the first computational model to the user equipment versus an expected performance gain associated with use of the first computational model by the user equipment.

The method may comprise as referenced A2, sending to the access node a notification when one or more of the one or more conditions associated with switching to the first computational model are satisfied.

The method may comprise as referenced A3, receiving the first computational model from the access node when the first computational model is to be used. It should be appreciated that the method outlined in Figure 10 may be modified to include any of the previously described features.

Computer program code may be downloaded and stored in one or more memories of the relevant apparatus or device.

Reference is made to Figure 11 which shows a method of some embodiments.

This method may be performed by an apparatus. The apparatus may be in or be an access node.

The apparatus may comprise suitable circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2.

The method may be provided by computer program code or computer executable instructions.

The method may comprise as referenced B1, sending to a user equipment one or more conditions associated with switching to using a first computational model, the one or more conditions being based on one or more estimations for a cost for transferring the first computational model to the user equipment versus an expected performance gain associated with use of the first computational model by the user equipment.

The method may comprise as referenced B2, receiving a notification when one or more of the one or more conditions associated with switching to using the first computational model by the user equipment are satisfied.

The method may comprise as referenced B3, sending the first computational model to the user equipment when the first computational model is to be used.

It should be appreciated that the method outlined in Figure 11 may be modified to include any of the previously described features.

Computer program code may be downloaded and stored in one or more memories of the relevant apparatus or device.

Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit such as a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiments of this disclosure. However, various modifications and adaptations may become apparent to those skilled in the relevant arts in view of the foregoing description, when read in conjunction with the accompanying drawings and the appended claims. Indeed, there are further embodiments comprising a combination of one or more embodiments with any of the other embodiments previously discussed. The scope of protection sought for some embodiments of the disclosure is set out by the claims. The embodiments and features, if any, described in this specification that do not fall under the scope of the claims are to be interpreted as examples useful for understanding various embodiments of the disclosure. It should be noted that different claims with differing claim scope may be pursued in related applications such as divisional or continuation applications.

## Claims

1. A user equipment comprising:

   means for receiving from an access node one or more conditions associated with switching to a first computational model, the one or more conditions being based on one or more estimations for a cost for transferring the first computational model to the user equipment versus an expected performance gain associated with use of the first computational model by the user equipment; and
   means sending to the access node a notification when one or more of the one or more conditions associated with switching to the first computational model are satisfied,
   the means for receiving is further for receiving the first computational model from the access node when the first computational model is to be used.

2. The user equipment as claimed in claim 1, wherein prior to receiving the first computational model, the means for receiving is further being for receiving information from the access node indicating that the first computational model is to be used,

3. The user equipment as claimed in claim, 1, comprising means for determining that the first computational model is to be used, said notification being sent to the access node in response to determining that the first computational model is to be used.

4. The user equipment as claimed in any preceding claim, wherein the first computational model comprises one or more of an associated validity area and an associated validity period.

5. The user equipment as claimed in claim 4, wherein the validity area comprises one or more specific cells associated with a respective access node.

6. The user equipment as claimed in any preceding claim, wherein when the first computational model is not to be used, the means for receiving is for receiving an indication indicating a method to be used or a default method is to be used.

7. The user equipment as claimed in any preceding claim, wherein the one or more conditions associated with switching to the first current computational model are provided in a switching policy.

8. The user equipment as claimed in any preceding claim, wherein the first computational model comprises a first machine learning model or a non-machine learning method.

9. The user equipment as claimed in claim 8, wherein, in a learning phase, the receiving means is for receiving a request from an access node for information about the user equipment when an update of switching policy is needed, the means for sending is for sending the information about the user equipment to the access node, and the means for receiving is for receiving an updated switching policy for the first machine learning model.

10. The user equipment as claimed in claim 9, wherein an update of switching policy is needed: when a current computational model is no longer valid; or a trigger is received from a network entity, a network function or an access node.

11. The user equipment as claimed in any preceding claim, wherein the first computational model is used for one or more of: beam prediction; beam management; channel state information compression; and positioning the user equipment.

12. An apparatus comprising:

   means for sending to a user equipment one or more conditions associated with switching to using a first computational model, the one or more conditions being based on one or more estimations for a cost for transferring the first computational model to the user equipment versus an expected performance gain associated with use of the first computational model by the user equipment; and

means for receiving a notification when one or more of the one or more conditions associated with switching to using the first computational model by the user equipment are satisfied,

the means for sending further being for sending the first computational model to the user equipment when the first computational model is to be used.

13. A method comprising:

receiving from an access node one or more conditions associated with switching to a first computational model by a user equipment, the one or more conditions being based on one or more estimations for a cost for transferring the first computational model to the user equipment versus an expected performance gain associated with use of the first computational model by the user equipment;

sending to the access node a notification when one or more of the one or more conditions associated with switching to the first computational model are satisfied; and

receiving the first computational model from the access node when the first computational model is to be used.

14. A method comprising:

sending to a user equipment one or more conditions associated with switching to using a first computational model, the one or more conditions being based on one or more estimations for a cost for transferring the first computational model to the user equipment versus an expected performance gain associated with use of the first computational model by the user equipment;

receiving a notification when one or more of the one or more conditions associated with switching to using the first computational model by the user equipment are satisfied; and

sending the first computational model to the user equipment when the first computational model is to be used.

15. A computer program comprising computer executable instructions which when executed cause the method of claim 13 or claim 14 to be performed.

## Fig. 1

101

RAN 100

AN 102

UE 300

Core Network 104

NWDAF 106

NF 105    NF 105    NF 105

AF 107

DN 109

OAM 108

EP 4 601 350 A1

Fig. 3

Fig. 2

# Fig. 4

Data Collection 400

Training Data → 402 **Model Training**

Monitoring Data → 404 **Management**

Inference Data → 406 **Inference**

Trained/updated Model

Performance feedback/ Retraining request

Model transfer/ delivery request

408 **Model Storage**

Inference Output

Selection/ (de)activation/ switching/ fallback

Model transfer/delivery

EP 4 601 350 A1

Fig. 5

EP 4 601 350 A1

Fig. 6

gNB

UE2

UE1

1: Request UE information
(e.g. speed, battery level)
when out of validity area of the model

2: Send required information

3: Send required information

4: Analyse informations &
update switching policy (RL)

5: Send updated switching policy
(e.g threshold values)

6: Send updated switching policy
(e.g threshold values)

Fig. 7

EP 4 601 350 A1

Fig. 8

Fig. 9

A1- receiving from an access node one or more conditions associated with switching to a first computational model by a user equipment, the one or more conditions being based on one or more estimations for a cost for transferring the first computational model to the user equipment versus an expected performance gain associated with use of the first computational model by the user equipment

A2- sending to the access node a notification when one or more of the one or more conditions associated with switching to the first computational model are satisfied

A3- receiving the first computational model from the access node when the first computational model is to be used

# Fig. 10

B1-sending to a user equipment one or more conditions associated with switching to using a first computational model, the one or more conditions being based on one or more estimations for a cost for transferring the first computational model to the user equipment versus an expected performance gain associated with use of the first computational model by the user equipment

B2- receiving a notification when one or more of the one or more conditions associated with switching to using the first computational model by the user equipment are satisfied

B3- sending the first computational model to the user equipment when the first computational model is to be used

# Fig. 11

EP 4 601 350 A1

Europäisches
Patentamt

European
Patent Office

Office européen
des brevets

## EUROPEAN SEARCH REPORT

**Application Number**

EP 24 15 6058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "TR 38.843 v1.3.0 on Artificial Intelligence (AI)/Machine Learning (ML) for NR air interface", 3GPP DRAFT; R1-2312764; TYPE DRAFT TR; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Chicago, US; 20231113 - 20231117 2 December 2023 (2023-12-02), XP052552356, Retrieved from the Internet: URL:https://www.3gpp.org/ftp/TSG_RAN/WG1_RL1/TSGR1_115/Docs/R1-2312764.zip R1-2312764 38843-130 r1 rm.docx [retrieved on 2023-12-02] | 1-15 | INV. H04W24/02 |
| Y | * page 1 - page 191 * ----- | 2,3,8 | |
| Y | DA WANG ET AL: "Further discussions on architecture general aspects of AIML for NR air-interface", 3GPP DRAFT; R2-2309661; TYPE DISCUSSION; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Xiamen, CN; 20231009 - 20231013 29 September 2023 (2023-09-29), XP052528661, Retrieved from the Internet: URL:https://www.3gpp.org/ftp/TSG_RAN/WG2_RL2/TSGR2_123bis/Docs/R2-2309661.zip R2-2309661.docx [retrieved on 2023-09-29] * page 1 - page 10 * ----- -/-- | 2,3 | TECHNICAL FIELDS SEARCHED (IPC) H04W |

The present search report has been drawn up for all claims

| Place of search | Date of completion of the search | Examiner |
|---|---|---|
| Munich | 26 June 2024 | Aguilar Cabarrus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 15 6058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/014896 A1 (INTEL CORP [US]) 9 February 2023 (2023-02-09) * page 2, line 29 - page 45, line 11 * * figure 6 * ----- | 8 | |

TECHNICAL FIELDS
SEARCHED      (IPC)

The present search report has been drawn up for all claims

| Place of search | Date of completion of the search | Examiner |
|---|---|---|
| Munich | 26 June 2024 | Aguilar Cabarrus, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 6058

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| WO 2023014896 A1 | 09-02-2023 | EP 4381807 A1<br>US 2024205781 A1<br>WO 2023014896 A1 | 12-06-2024<br>20-06-2024<br>09-02-2023 |

EPO FORM P0459

For more details about this annex : see Official Journal of the European Patent Office, No. 12/82